# EUROPEAN PATENT APPLICATION

(11) **EP 3 991 532 A1**
(43) Date of publication of application: **04.05.2022**
(21) Application number: 20833369.0
(22) Date of filing: 09.06.2020
(51) Int. Cl.: A01B 69/00, G05D 1/02

(54) **WORK VEHICLE**

(30) Priority: 28.06.2019 JP 2019122525
(71) Applicant: KUBOTA CORPORATION, Osaka-shi, Osaka 556-8601 (JP)
(72) Inventor: MORIOKA, Yasuaki, Sakai-shi, Osaka 590-0823 (JP)
(74) Representative: Bittner, Thomas L.
(86) International application number: PCT/JP2020/022694
(87) International publication number: WO 2020/261980

(57) **Abstract**

A working vehicle (1), includes a vehicle body (2) travelable by selectively using either manual steering that is manual operation of a steering wheel (30) or automatic steering that is automatic operation of the steering wheel (30) based on a traveling reference line (L1), a steering switch (52) configured to be switched to selectively start or terminate the automatic steering after determination of the traveling reference line (L1), and a calculation device to calculate the number of works (WTi) defined as the number of completed ground works. (Fig. 1)

## Description

### Technical field

The present invention relates to a working vehicle such as a tractor.

### Background art

Patent Document 1 is known as a disclosure of a conventional agricultural machine. The agricultural machine of Patent Document 1 includes a traveling machine body that can travels selectively in a manual traveling operation by manual steering or in an automatic traveling operation by automatic steering, the automatic traveling operation performing the traveling along a determined traveling line parallel with a traveling reference line, and a changeover switch that can selectively specify the manual traveling or the automatic traveling. In the agricultural machine, a starting point of the traveling reference line is determined after a right indication button has been pressed while the agricultural machine is traveling along a ridge, and a terminating point of the traveling reference line is determined by pressing a left indication button while the agricultural machine is traveling. That is, the traveling reference line is determined before the automatic steering.

### [Related art documents]

[Patent document] Japanese Unexamined Patent Publication No. 2017-123803

### Disclosure of the invention

### Problems to be solved by the invention

In the agricultural working machine of Patent Document 1, a planned traveling line parallel to the traveling reference line is defined after determining the traveling reference line, so that the agricultural working machine can repeat a straight-line traveling in an agricultural field while traveling along the planned traveling line. However, it was difficult for a driver to memorize the number of times of the straight-line traveling performed in the agricultural field after starting a work, that is, the number of works.

Accordingly, in view of the above-mentioned problems, the present invention intends to provide a working vehicle capable of easily knowing the number of ground works by using the automatic steering based on a traveling reference line.

### Means of solving the problems

Technical means of the invention to solve the technical problems are characterized by the following points.

A working vehicle includes a vehicle body travelable by selectively using either manual steering that is manual operation of a steering wheel or automatic steering that is automatic operation of the steering wheel based on a traveling reference line, a steering switch configured to be switched to selectively start or terminate the automatic steering after determination of the traveling reference line, and a calculation device to calculate the number of works defined as the number of completed ground works.

The calculation device is configured or programed to display, as the number of works, the number of switching operations of the steering switch to either start or terminate the automatic steering.

The calculation device is configured or programed to calculate, as the number of works, the number of turns of the vehicle by using the manual steering after the determination of the traveling reference line or after termination of the automatic steering.

The calculation device is configured or programed to calculate, as the number of works, the number of switching operations of the steering switch to start the automatic steering after the determination of the traveling reference line.

The working vehicle includes a counter reset switch. The calculation device is configured or programmed to reset the number of works when the counter reset switch is operated.

The calculation device is configured or programmed to reset the number of works when the vehicle body is turned by using the manual steering after the counter reset switch is operated.

The calculation device is configured or programmed to reset the number of works when the steering switch is operated to start the automatic steering after the counter reset switch is operated.

The calculation device is configured or programmed to reset the number of works when an operation to determine the traveling reference line is performed.

The working vehicle includes a display to display the number of works at least after the automatic steering.

### Effects of the invention

According to the invention, the number of performed ground works can be easily known.

### Brief description of the drawings

- Fig. 1: is a view showing a configuration of a tractor and a control block diagram thereof.
- Fig. 2: is an explanation view explaining an automatic steering.
- Fig. 3: is an explanation view explaining a motion of the automatic steering.
- Fig. 4: is a view showing a tractor's traveling trajectory on which starting and terminating points of the automatic steering are defined.
- Fig. 5: is a view showing an example of a driving screen M1.
- Fig. 6: is a view showing a relationship between the number of works WTi and an operation of a counter reset switch.
- Fig. 7: is a whole view of the tractor.

### Best mode for carrying out the invention

Referring to drawings, an embodiment of the invention will be described below.

### [First embodiment]

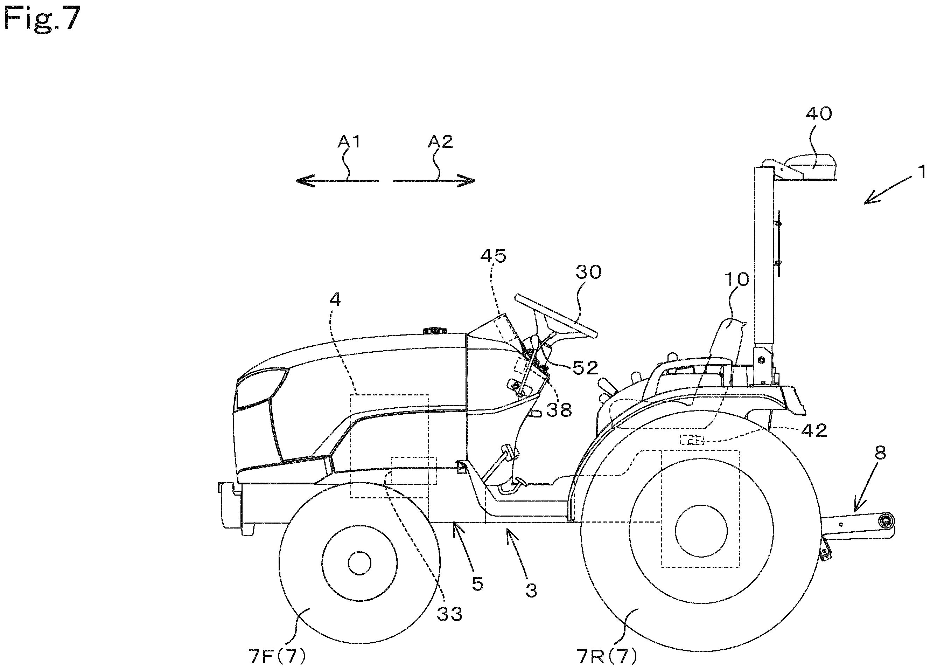

Fig. 7 is a side view of a working vehicle 1 according to an embodiment, and Fig. 7 is a plan view showing the working vehicle 1 according to the embodiment. In the embodiment, the working vehicle 1 is a tractor. However, the working vehicle 1 is not limited to the tractor, and may be an agricultural machine (agricultural vehicle) such as a combine harvester or a transplanter or may be a construction machine (construction vehicle) such as a loader.

Fig. 7 is a side view showing the working vehicle 1. The tractor (working vehicle) 1 will be explained using Fig. 7 and the like. In the following description, a forward direction (a direction of an arrowed line A1 in Fig. 7) of a driver sitting on a driver's seat 10 of the tractor (working vehicle) 1 is referred to as the front, a backward direction (a direction of an arrowed line A2 in Fig. 7) of the driver is referred to as the rear, a leftward direction of the driver is referred to as the left, and a rightward direction of the driver is referred to as right. In the description, a horizontal direction, which is orthogonal to a fore-and-aft direction of the working vehicle 1, is referred to as a vehicle width direction.

As shown in Fig. 7, the tractor 1 includes a vehicle body 3, a prime mover 4, and a transmission 5. The vehicle body 3 includes traveling devices 7 and is capable of traveling. The traveling devices 7 are devices having front wheels 7F and rear wheels 7R. The front wheels 7F may be configured as tires or wheels of crawler devices. The rear wheels 7R may also be configured as tires or wheels of crawler devices.

The prime mover 4 is a diesel engine, an electric motor, or the like, and is constituted of a diesel engine in this embodiment. The transmission 5 is configured to speed-shift power for propulsion of the traveling devices 7, and is also configured to switch each of traveling directions of the traveling devices 7 between the forward direction and the backward direction. The driver's seat 10 is disposed on the vehicle body 3.

A coupling portion 8, which is constituted of a three-point link mechanism or the like, is disposed on a rear portion of the vehicle body 3. A working device can be attached to and detached from the coupling portion 8. When the working device is coupled to the coupling portion 8, the working device can be towed by the vehicle body 3. The working device is a cultivator that performs cultivation, a fertilizer sprayer that sprays fertilizer, a pesticide sprayer that sprays pesticides, a harvester that performs harvesting, a mower that mows grass or the like, a ridging device that makes ridges, or the like, and is a device that performs a work (ground work) on a ground of an agricultural field or the like.

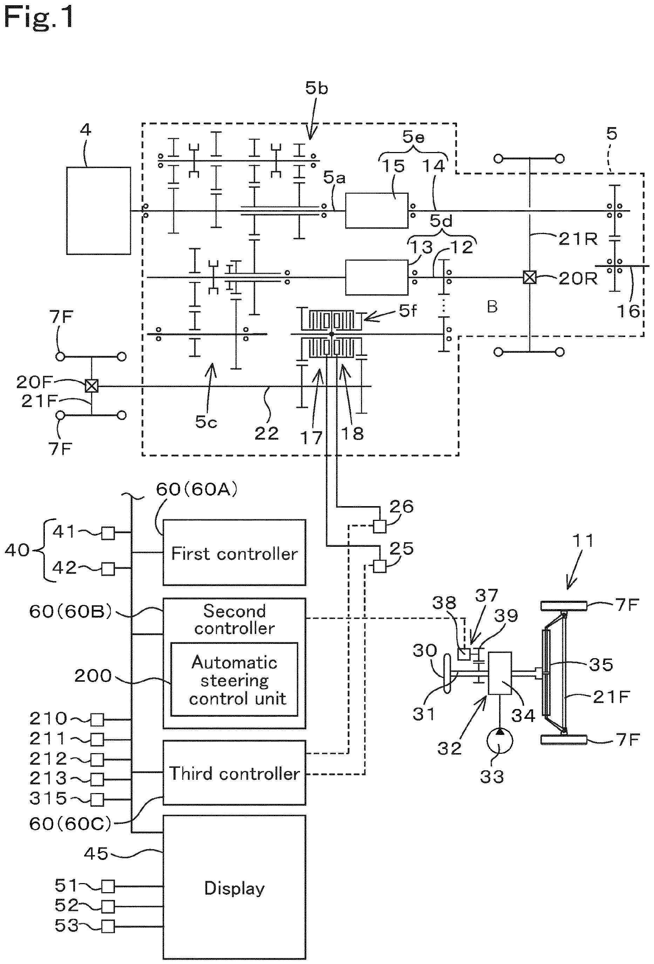

As shown in Fig. 1, the transmission 5 includes a main shaft (propulsion shaft) 5a, a main speed-changing unit 5b, a sub speed-changing unit 5c, a shuttle unit 5d, a PTO power transmission unit 5e, and a front speed-changing unit 5f. The propulsion shaft 5a is rotatably supported by a housing case (transmission case) of the speed-changing device 5, and a power from the crank shaft of the prime mover 4 is transmitted to the propulsion shaft 5a. The main speed-changing unit 5b includes gears and a shifter that selects gears to be drivingly connected. The main speed-changing unit 5b selectively makes driving-connection (engagement) among the plurality of gears with the shifter to speed-change and output a rotation input from the propulsion shaft 5a.

The sub speed-changing unit 5c includes a plurality of gears and a shifter that selects gears to be drivingly connected and gears to be drivingly connected in the same manner as the main speed-changing unit 5b. The sub speed-changing unit 5c selectively makes driving-connection among the plurality of gears with the shifter to speed-change and output a rotation input from the main speed-changing unit 5b.

The shuttle unit 5d includes a shuttle shaft 12 and a forward/backward traveling switching unit 13. A power output from the sub speed-changing unit 5c is transmitted to the shuttle shaft 12 through gears and the like. The forward/backward traveling switching unit 13 is constituted of, for example, a hydraulic clutch and switches a rotational direction of the shuttle shaft 12, that is, between a forward traveling and a backward traveling of the tractor 1, through engagement and disengagement of the hydraulic clutch. The shuttle shaft 12 is connected to the rear wheel differential device 20R. The rear wheel differential device 20R rotatably supports rear axles 21R to which the rear wheels 7R are attached.

The PTO power transmission unit 5e includes a PTO propulsion shaft 14 and a PTO clutch 15. The PTO propulsion shaft 14 is rotatably supported, and a power from the propulsion shaft 5a can be transmitted thereto. The PTO propulsion shaft 14 is connected to the PTO shaft 16 via gears and the like. The PTO clutch 15 is constituted of, for example, a hydraulic clutch, and selectively enters a state where the power of the propulsion shaft 5a is transferred to the PTO propulsion shaft 14 or a state where the power of the propulsion shaft 5a is not transferred to the PTO propulsion shaft 14, through engagement and disengagement of the hydraulic clutch.

The front transmission unit 5f includes a first clutch 17 and a second clutch 18. The first clutch 17 and the second clutch 18 are capable of transmitting the power from the propulsion shaft 5a. For example, a power of the shuttle shaft 12 is transmitted through gears and a transmission shaft. The power from the first and second clutches 17 and 18 can be transmitted to the front axle 21F via the front transmission shaft 21. Specifically, the front transmission shaft 22 is connected to a front wheel differential device 20F, and the front wheel differential device 20F rotatably supports the front axles 21F to which the front wheels 7F are attached.

The first clutch 17 and the second clutch 18 are constituted of hydraulic clutches and the like. A fluid passage is connected to the first clutch 17, and the fluid passage is connected to a first actuation valve 25 to which hydraulic fluid delivered from a hydraulic pump 33 is supplied. The first clutch 17 is shifted between an engaged state and a disengaged state according to an opening degree of the first actuation valve 25. A fluid passage is connected to the second clutch 18, and the fluid passage is connected to a second actuation valve 26. The second clutch 18 is shifted between an engaged state and a disengaged state according to an opening degree of the second actuation valve 26. The first and second actuation valves 25 and 26 are, for example, two-position switching valves with solenoids, and shifts the state between the engaged state and the disengaged state by magnetizing and demagnetizing the solenoids of the solenoid valves.

When the first clutch 17 is in the disengaged state and the second clutch 18 is in the engaged state, the power of the shuttle shaft 12 is transmitted to the front wheels 7F through the second clutch 18. In this manner, the front wheels 7F and rear wheels 7R are driven by driving power in the four-wheel driving mode (4WD), and the rotational speeds of the front wheels 7F and rear wheels 7R become approximately the same (constant speed 4WD state). On the other hand, when the first clutch 17 is engaged and the second clutch 18 is disengaged, the four-wheel driving is established and the rotation speeds of the front wheels 7F become faster than the rotation speeds of the rear wheels 7R (speed-increasing 4WD state). In addition, when the first clutch 17 and the second clutch 18 are in the disengaged state, the power of the shuttle shaft 12 is not transmitted to the front wheels 7F, the rear wheels 7R are driven by the driving power in the two-wheel driving mode (2WD).

The tractor 1 includes a positioning device 40. The positioning device 40 is a satellite positioning system (positioning satellites) such as D-GPS, GPS, GLONASS, HOKUTO, Galileo, and MICHIBIKI, and is capable of detecting its own position (positioning information including latitude and longitude). That is, the positioning device 40 receives satellite signals (positions, transmission times, correction information, and the like of the positioning satellites) transmitted from the positioning satellites, and detects the positions (e.g., latitudes and longitudes) based on the satellite signals. The positioning device 40 includes a receiver 41 and an inertial measurement unit (IMU: Inertial Measurement Unit) 42. The receiver 41 is a device having an antenna and the like to receive satellite signals transmitted from positioning satellites, and is attached to the vehicle body 3 separately from the inertial measurement unit 42. In this embodiment, the receiver 41 is attached to a ROPS provided to the vehicle body 3. The attachment position of the receiver 41 is not limited to the position described in the embodiment.

The inertial measurement unit 42 has an acceleration sensor for detecting acceleration, a gyro sensor for detecting angular velocity, and the like. The inertial measurement unit 42 is disposed on the vehicle body 3, for example, below the driver's seat 10, and can detect a roll angle, a pitch angle, a yaw angle, and the like of the vehicle body 3.

As shown in Fig. 1, the tractor 1 includes a steering device 11. The steering device 11 is a device capable of performing manual steering, in which the vehicle body 3 is steered through a driver's operation, and automatic steering, in which the vehicle body 3 is steered automatically without the driver's operation.

The steering device 11 includes a steering wheel 30 and a steering shaft (rotation axis) 31 that rotatably supports the steering wheel 30. In addition, the steering device 11 includes an auxiliary mechanism (power steering device) 32. The auxiliary mechanism 32 assists rotation of the steering shaft 31 (steering wheel 30) with a hydraulic pressure or the like. The auxiliary mechanism 32 includes the hydraulic pump 33, a control valve 34 to which the hydraulic fluid delivered from the hydraulic pump 33 is supplied, and a steering cylinder 35 to be operated by the control valve 34. The control valve 34 is, for example, a three-position switching valve that can be shifted by moving a spool or the like, and is shifted in response to a steering direction (rotational direction) of the steering shaft 31. The steering cylinder 35 is connected to arms (knuckle arms) 36 so as to steer the front wheels 7F.

Accordingly, when the driver grasps the steering wheel 30 and operates the steering wheel 30 in one direction or the other, a position and an opening degree of the control valve 34 are changed according to the rotational direction of the steering wheel 30. Then, the steering cylinder 35 is extended or contracted leftward or rightward according to the position and opening degree of the control valve 34, thereby steering the front wheels 7F. That is, the vehicle body 3 can change its traveling direction to the left or right through the manual steering operation with the steering wheel 30.

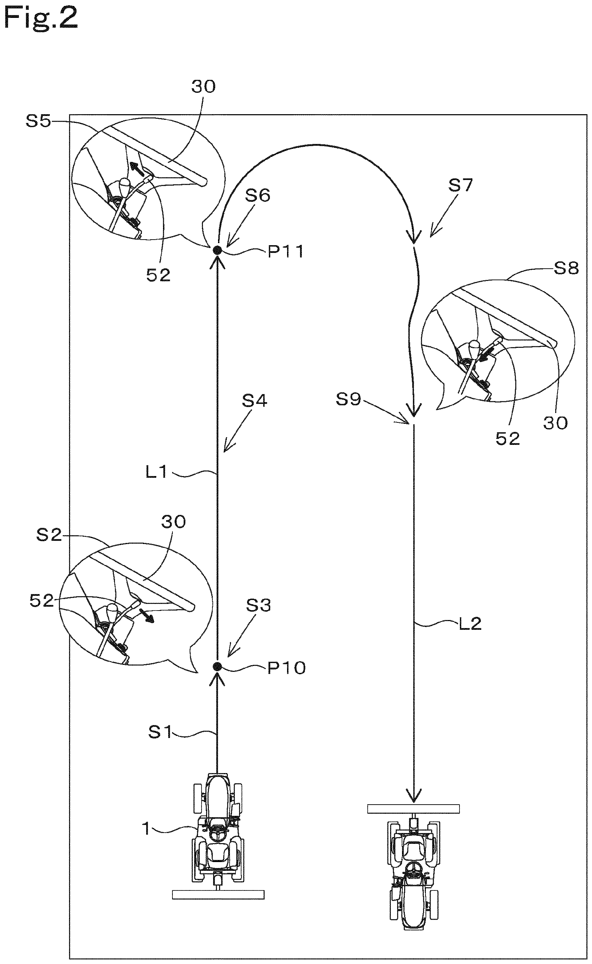

As shown in Fig. 2, in preparation for the automatic steering, a traveling reference line L1 is determined first before the automatic steering is performed. After determining the traveling reference line L1, a planned traveling line L2 parallel to the traveling reference line L1 is determined, and then the automatic steering can be performed. By the automatic steering, the traveling direction of the tractor 1 (vehicle body 3) is automatically turned so as to make the vehicle body position measured by the positioning device 40 coincide with the planned traveling line L2.

Specifically, the tractor 1 (vehicle body 3) is moved to a predetermined position in an agricultural field before the automatic steering is performed (S1), and when a driver operates a steering switch 52 provided in the tractor 1 at the predetermined position (S2), a vehicle position measured by the positioning device 40 is determined as a starting point P10 of the traveling reference line L1 (S3). When the tractor 1 (vehicle body 3) is moved from the starting point P10 of the traveling reference line L1 (S4) and the driver operates the steering switch 52 at the predetermined position (S5), the vehicle body position measured by the positioning device 40 is determined as a terminating point P11 of the traveling reference line L1 (S6). Accordingly, a straight line connecting the starting point P10 and the terminating point P11 is defined as the traveling reference line L1.

After defining the traveling reference line L1 (after S6), the tractor 1 (vehicle body 3) is moved to a location different from the location where the traveling reference line L1 was defined (S7) and the driver operates the steering switch 52 (S8). Accordingly, for example, the planned traveling line L2, which is a straight line parallel to the traveling reference line L1, is determined (S9). After determining the planned traveling line L2, the automatic steering is started, and the traveling direction of the tractor 1 (vehicle body 3) is changed to follow the planned traveling line L2. For example, when a current position of the vehicle body is leftward from the planned traveling line L2, the front wheels 7F are steered to the right, and when the current position of the vehicle body is rightward from the planned traveling line L2, the front wheels 7F are steered to the left. During the automatic steering, a traveling speed (vehicle speed) of the tractor 1 (vehicle body 3) can be changed, by the driver, by manually changing an operation amount of an accelerator (acceleration pedal, acceleration lever) 210 provided in the tractor 1 or changing a speed stage of the transmission 5 with a speed-changing member (speed-changing lever or speed-changing switch) 211.

In addition, after the automatic steering is started, the automatic steering can be terminated when the driver operates the steering switch 52 at an arbitrary point. That is, the terminating point of the planned traveling line L2 can be determined by operating the steering switch 52 to terminate the automatic steering. That is, a distance from the starting point to the terminating point of the planned traveling line L2 can be determined longer or shorter than the traveling reference line L1. In other words, the planned traveling line L2 is not associated with a distance of the traveling reference line L1, and a distance of the traveling by the automatic steering can be longer than the distance of the traveling reference line L1 along the planned traveling line L2.

As shown in Fig. 1, the steering system 11 includes an automatic steering mechanism 37. The automatic steering mechanism 37 is a mechanism for the automatic steering of the vehicle body 3 based on a position (vehicle position) of the vehicle body 3 detected by the positioning device 40. The automatic steering mechanism 37 includes a steering motor 38 and a gear mechanism 39. The steering motor 38 is a motor whose rotational direction, rotation speed, rotation angle, and the like can be controlled based on the vehicle body position. The gear mechanism 39 includes gears disposed on the steering shaft 31 and configured to rotate with the steering shaft 31, and gears disposed on a rotation shaft of the steering motor 38 and configured to rotate with the rotation shaft. When the rotation shaft of the steering motor 38 rotates, the steering shaft 31 automatically rotates (turns) via the gear mechanism 39, and the front wheels 7F can be steered to change their directions so as to make the vehicle position coincide with the planned traveling line L2.

As shown in Fig. 1, the tractor 1 includes a display 45. The display 45 is a device capable of displaying various information about the tractor 1, and displays at least operational information of the tractor 1. The display 45 is disposed in front of the driver's seat 10.

As shown in Fig. 1, the tractor 1 includes a setting switch 51. The setting switch 51 is a switch that enables a setting mode in which at least settings are made before the automatic steering is started. The setting mode is a mode in which various settings related to the automatic steering are made before the automatic steering is started, for example, a mode for determining the starting and terminating points of the traveling reference line L1.

The setting switch 51 can be turned on or off. The setting switch 51, when turned on, outputs a signal representing that the setting mode is valid, and the setting switch 51, when turned off, outputs a signal representing that the setting mode is invalid. In addition, the setting switch 51, when turned on, outputs, to the display 45, the signal representing that the setting mode is valid, and the setting switch 51, when turned off, outputs, to the display 45, the signal representing that the setting mode is invalid.

The tractor 1 includes a steering switch 52. The steering switch 52 is switchable for selecting either starting or terminating of the automatic steering. Specifically, the steering switch 52 can be shifted upward, downward, forward, and backward from a neutral position. When the steering switch 52 is shifted downward from the neutral position with the setting mode being valid, the steering switch 52 outputs a signal to start the automatic steering, and when the steering switch 52 is shifted upward from the neutral position with the setting mode being valid, the steering switch 52 outputs a signal to terminate the automatic steering. In addition, when the steering switch 52 is shifted backward from the neutral position with the setting mode being valid, the steering switch 52 outputs a signal to set a starting point P10 of the traveling reference line L1, and when the steering switch 52 is shifted forward from the neutral position with the setting mode being valid, the steering switch 52 outputs a signal to set a terminating point P11 of the traveling reference line L1. That is, the steering switch 52 serves as both of a registration switch to set the starting position (starting point P10) and terminating position (terminating point P11) of the traveling reference line L1 and a switch for selecting the starting or terminating of the automatic steering.

As shown in Fig. 1, the tractor 1 includes a plurality of controllers 60. The plurality of controllers 60 are devices for controlling a traveling system in the tractor 1, controlling a working system in the tractor 1, calculating a vehicle body position, and the like. The plurality of controllers 60 include a first controller 60A, a second controller 60B, and a third controller 60C.

The first controller 60A receives a satellite signal (received information) received by the receiver 41 and measurement information (acceleration, angular velocity, etc.) measured by the inertial measurement unit 42, and obtains a vehicle body position based on the received information and the measurement information. The second controller 60B includes an automatic steering control unit 200. The automatic steering control unit 200 is constituted of an electric/electronic circuit provided in the second controller 60B, a computer program stored in a CPU, and the like. The automatic steering control unit 200 controls the steering motor 38 of the automatic steering mechanism 37 so that the vehicle body 3 travels along the planned traveling line L2.

In addition, as described above, the first controller 60A controls operations related to the setting of the starting point P10 and terminating point P11 of the traveling reference line L1. That is, when the steering switch 52 is shifted to a side for setting the starting point, the first controller 60A determines the vehicle body position as the starting point P10 of the traveling reference line L1. And, when the steering switch 52 is shifted to a side for setting the terminating point, the first controller 60A determines the vehicle body position as the terminating point P11 of the traveling reference line L1.

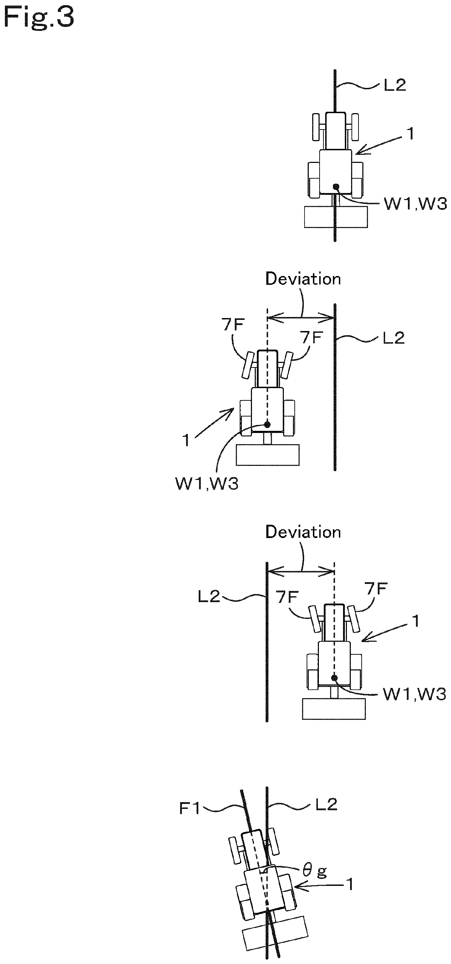

As shown in Fig. 3, when a deviation between the vehicle body position and the planned traveling line L2 is less than a threshold value, the automatic steering control unit 200 maintains a rotation angle of a rotation shaft of the steering motor 38. When the deviation (positional deviation) between the vehicle body position and the planned traveling line L2 is equal to or greater than the threshold value and the tractor 1 is positioned leftward to the planned traveling line L2, the automatic steering control unit 200 rotates the rotation shaft of the steering motor 38 so that the tractor 1 is steered to the right. That is, the automatic steering control unit 200 sets a steering angle to the right so that the positional deviation becomes zero. When the deviation between the vehicle position and the planned traveling line L2 is equal to or greater than the threshold value and the tractor 1 is positioned rightward to the planned traveling line L2, the automatic steering control unit 200 rotates the rotation shaft of the steering motor 38 so that the steering direction of the tractor 1 is shifted to the left so that the tractor 1 is steered to the left. That is, the automatic steering control unit 200 sets a steering angle to the left so that the positional deviation becomes zero.

In the above-mentioned embodiment, a steering angle of the steering device 11 is changed based on the deviation between the vehicle body position and the planned traveling line L2; however, when a direction of the planned traveling line L2 is different from a direction (vehicle body direction) F1 of a traveling direction of the tractor 1 (vehicle body 3), that is, when an angle θg of the vehicle body direction F1 to the planned traveling line L2 is equal to or greater than a threshold, the automatic steering control unit 200 may set the steering angle so that the angle θg becomes zero (the vehicle body direction F1 coincides with a direction of the planned traveling line L2). In addition, the automatic steering control unit 200 may set a final steering angle in the automatic steering based on the steering angle obtained based on the deviation (position deviation) and the steering angle obtained based on the direction (directional deviation). The setting of the steering angle in the automatic steering according to the above-mentioned embodiment is an example and is not limited thereto.

In addition, when the accelerator 210 is operated in a state where the automatic steering is being performed by the automatic steering control unit 200, the second controller 60B changes a rotation speed of the prime mover 4 (prime mover rotation speed) is changed according to an operation amount of the accelerator 210. Also, when a speed-changing member 211 is operated in the state where the automatic steering is being performed by the automatic steering control unit 200, the second controller 60B changes the speed-changing step of the speed-changing device 5.

The third controller 60C raises and lowers the coupling portion 8 according to an operation of an operation member disposed around the driver's seat 10. The first controller 60A, the second controller 60B and the third controller 60C may be integrated into a single unit. The above-mentioned control of the traveling system, control of the working system, and calculation of the vehicle body position are not limited thereto. As described above, the controller 60 can automatically steer the tractor 1 (vehicle body 3).

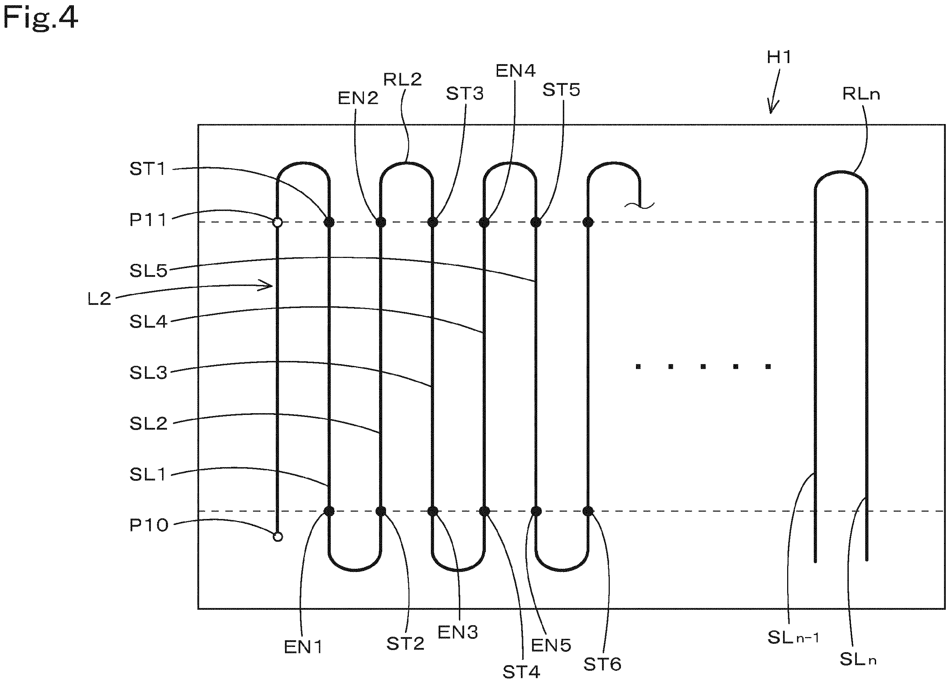

In a case where a work (ground work) is to be performed in an agricultural field H1, a working device corresponding to the work is coupled to the tractor 1, and then the tractor 1 coupled to the working device is driven in the agricultural field H1. As shown in Fig. 4, for example, in a case where the ground work is to be performed in the agricultural field H1, the tractor 1 performs the work while repeating the straight traveling and the turning as shown on the planned traveling line L2. That is, when the tractor 1 approaches a ridge, the tractor 1 turns and then travels straight, and when the tractor 1 approaches a ridge on the opposite side, the tractor 1 turns again and then travels straight. When turning, the working device is raised, which is one of a working position, and no work is performed during an area of the turning.

In this manner, in performing the work while repeating the turning, the automatic steering is performed on a straight-traveling portion SLn (n = 1, 2, 3...) of the planned traveling line L2. For example, on a first straight-traveling portion SL1, a driver operates the steering switch 52 to start the automatic steering at a starting position ST1 (STn: n=1), and then the driver operates the steering switch 52 while watching a work condition, thereby terminating the automatic steering at a terminating position EN1 (ENn: n=1). In addition, the driver operates a correction switch 53 according to a state where the automatic steering is being performed on the first straight-traveling portion SL1, thereby finely adjusting the vehicle body position of the tractor 1, and the driver operates the accelerator 210 and the speed-changing member 211 according to the work condition, thereby adjusting a vehicle speed of the tractor 1.

In addition, after the automatic steering is terminated at a terminating position EN1, the driver manually steers the tractor 1 to make the turning of the tractor 1, then when coming on a second straight-traveling portion SL2, the driver operates the steering switch 52 to start the automatic steering at a starting position ST2, and operates the steering switch 52 to terminate the automatic steering at a terminating position EN2. That is, in the agricultural field H1, the tractor 1 travels along respective turning portions RLn, which connect the straight-traveling portions SLn, by the manual steering.

As described above, when the steering switch 52 is operated at the starting position STn (n = 1, 2, 3...) and the terminating position ENn (n=1, 2, 3...), a work can be performed while repeating the automatic steering and the manual steering. Here, since the tractor 1 performs the work (ground work) while traveling straight, a total of the number of traveling reference lines L1 and the number of straight-traveling portions SLn can be regarded as the number of the works (number of works) WTi in the agricultural field H1. That is, the number of works WTi can be represented by a total of the number of traveling reference lines L1 and the number of straight-traveling portions SLn. Since the traveling reference lines L1 may be determined without performing any work, the number of works WTi can be represented by the number of straight-traveling portions SLn without including the number of traveling reference lines L1.

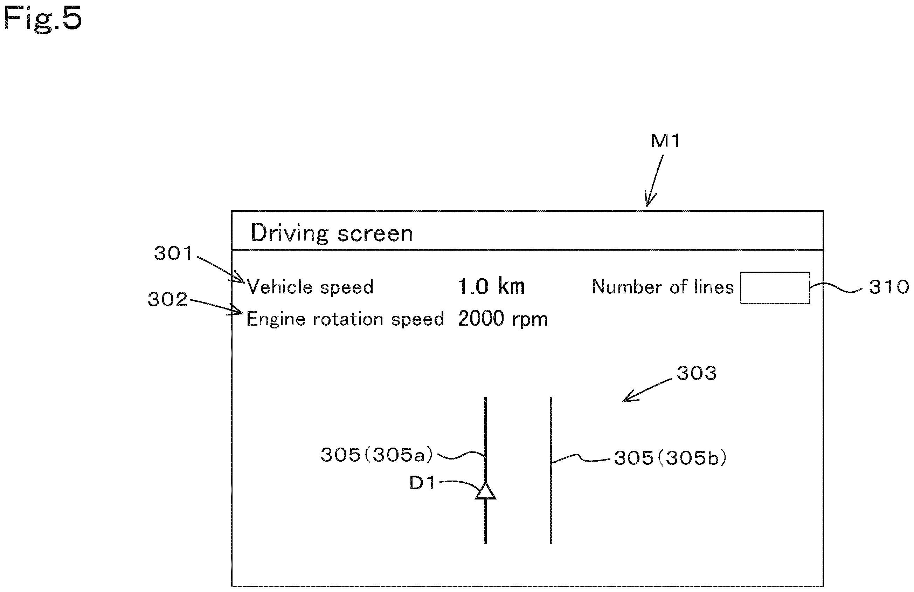

The display 45 can display the number of works WTi. Fig. 5 shows an example of a driving screen M1 displayed by the display 45 during the automatic steering.

The driving screen M1 includes a vehicle speed indicating portion 301 that indicates a vehicle speed (traveling speed), a rotation speed indicating portion 302 that indicates the prime mover rotation speed, a line indicating portion 303 that indicate the traveling lines (traveling reference line L1 and planned traveling line L2), and a number-of-lines indicating portion 310. In the line indicating portion 303, a figure D1 indicating the tractor 1 (vehicle body 3) is displayed.

The vehicle speed indicating portion 301 indicates a vehicle speed detected by a speed detector (vehicle speed detector) 212. The rotation speed indicating portion 302 indicates a prime mover rotation speed detected by the rotation speed detector 213. The speed detector 212 is a sensor to detect rotation speeds of the front wheels 7F, rear wheels 7R, front axles 21F, and rear axles 21R, and converts the detected rotation speeds into a vehicle speed.

The line display portion 303 includes a plurality of straight-linear figures 305 that imitate the straight-traveling portion SLn of the planned traveling line L2.

The plurality of straight-traveling figures 305 include a current straight-linear figure 305a, which indicates the straight-traveling portion SLn closest to a vehicle body position of the tractor 1 (current vehicle body position), and a next straight-linear figure 305b next closest to the vehicle body position of the tractor 1 (current vehicle body position). In other words, the current straight-traveling figure 305a indicates the straight-traveling portion SLn having the smallest number "n" among the straight-traveling portions SLn on which the automatic steering have not been performed, and the next straight-traveling figure 305b indicates the next straight-traveling portion SLn next to the current straight-traveling figure 305a among the straight-traveling portions SLn on which the automatic steering have not been performed. In this embodiment, the number of the next straight-traveling figure 305b is one. The next straight-traveling figure 305b is displayed on a screen as a line parallel to the traveling reference line L1 at a position offset at a predetermined interval between the planned traveling lines. The interval between the planned traveling lines can be a value calculated based on the traveling reference line L1 and a position at which next automatic steering is started. In the above-described embodiment, the current straight-traveling figure 305a and the next straight-traveling figure 305b are displayed in the driving screen M1 of Fig. 5; however, only the current straight-traveling figure 305a, which indicates one planned traveling line L1, may be displayed. That is, the driving screen M1 does not need to display the next straight-traveling figure 305b.

The number-of-lines display portion 310 displays the number of works WTi. The number of works WTi is calculated by a calculation device provided in the tractor 1. The calculation device is the second controller 60B. The calculation device may be the first controller 60A or the third controller 60C, and may be integrated with the display 45. The calculation device may be anything having a calculating function such as a CPU.

The second control device (calculation device) 60B determines, as the number of works WTi, the number of switching operations of the steering switch 52 to start or terminate the automatic steering. For example, the second controller 60B determines the number of times at which the starting of the automatic steering is selected by the steering switch 52 after the determination of the traveling reference line L1 is completed (the number of switching operations for starting). In other words, the second controller 60B determines the number of starting positions STn as the number of works WTi.

The second controller 60B determines, as the number of works WTi, the number of times at which the terminating of the automatic steering is selected by the steering switch 52 after the determination of the traveling reference line L1 is completed (the number of switching operations for terminating). In other words, the second controller 60B determines the number of terminating positions ETn as the number of works WTi.

For example, the selection of either the number of switching operations for starting or the number of switching operations for terminating (setting of the number of works) to serve as the number of works WTi is performed, for example, at the time of manufacturing or maintenance of the tractor 1. The above-mentioned selection as the number of works may be set by a driver or the like through an operation of the display 45.

As described above, in a case where the number of switching operations for starting is determined as the number of works WTi, the number-of-lines display portion 310 displays the counted-up number of works WTi every time when the automatic steering is started by the steering switch 52. In a case where the number of switching operations for terminating is determined as the number of works WTi, the number-of-lines display portion 310 displays the counted-up number of works WTi every time when the automatic steering is terminated by the steering switch 52.

In the above-described embodiment, the number of switching operations for starting or the number of switching operations for terminating is adopted as the number of works WTi; instead, the number of turnings of the vehicle body 3 in the manual steering (number of turns) may be adopted as the number of works WTi. For example, after determination of the traveling reference line L1, the second controller 60B judges whether the manual steering is performed or not. When the second controller 60B determines that the manual steering is performed, the second controller 60B monitors a steering angle set in the steering device 11 in the manual steering. When the steering angle set in the steering system 11 in the manual steering becomes equal to or greater than a turn threshold (a value that can be judged as a turn), the second controller 60B determines that the vehicle body 3 has turned, and counts the number of turns. In other words, the second controller 60B adopts, as the number of works WTi, the number of turning portions on the planned traveling lines L2. In this case, the number-of-lines display portion 310 displays the counted-up number of works WTi every time when the vehicle body 3 turns.

As shown in Fig. 1, the tractor 1 may include a counter reset switch 315. The counter reset switch 315 is, for example, an automatic return switch that can be turned on or off, and is connected to the second controller 60B. The counter reset switch 315 is a switch to accept an intention to reset the number of works. The counter reset switch 315, when being turned on, accepts the intention to reset the number of works, and the counter reset switch 315, when being turned off, does not accept the intention to reset the number of works. Under a state where the work is performed while traveling on the straight-traveling portion SLn corresponding to the current straight-traveling figure 305a, the driver operates the counter reset switch 315 when it is desired to reset the past number of works when a work is not performed on the straight-traveling portion SLn (next straight-traveling portion SLn) just next to the straight-traveling portion SLn (current straight-traveling portion SLn) corresponding to the current straight-traveling figure 305a.

When the counter reset switch 315 is operated, that is, when the counter reset switch 315 is turned on, the second controller 60B resets the number of works WTi to zero.

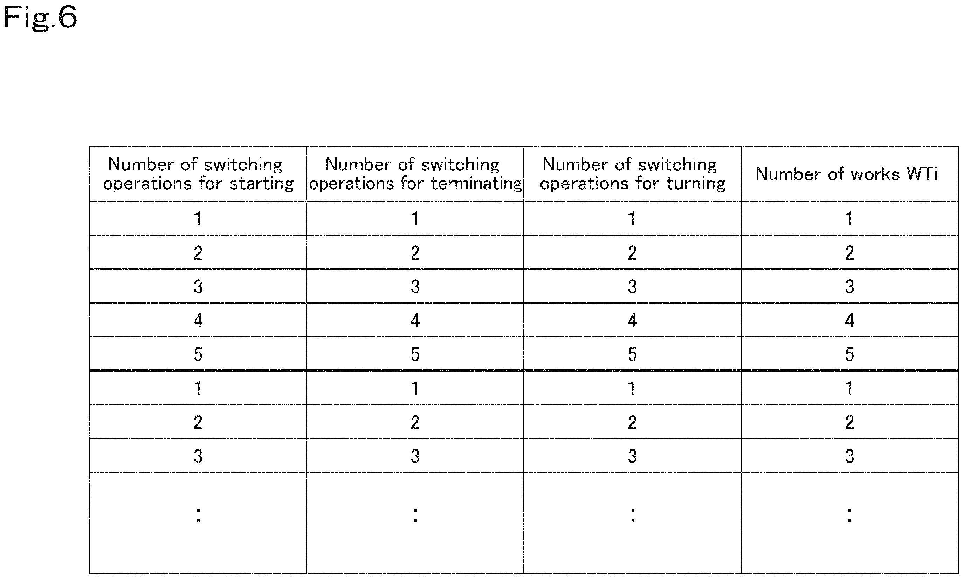

Fig. 6 shows a relationship between an operation of the counter reset switch 315 and the number of works WTi. When the counter reset switch 315 is turned on from a state being turned off when the number of times is, for example, five in any one of the number of switching operations for starting, the number of switching operations for terminating, and the number of turns, the second controller 60B sets the number of works WTi to zero, that is, sets, to zero, the number of switching operations for starting, the number of switching operations for terminating, and the number of turns. Then, the second controller 60B determines the number of works WTi by counting up, from zero, the number of switching operations for starting, the number of switching operations for terminating, and the number of turns when the automatic steering is started or terminated, or when the turning is performed.

In the above-described embodiment, the counter reset switch 315 is configured as a separate switch; however, the counter reset switch 315 may be a button configured to perform other additional functions (for example, realized by pressing and holding the correction switch 53).

In addition, the configuration resets the number of works WTi when the counter reset switch 315 is turned on; however, the configuration may reset the number of works WTi when the turning is performed in the manual steering after the counter reset switch 315 is turned on.

The configuration may reset the number of works WTi when the steering switch 52 is operated to start the automatic steering on the next planned traveling line L2 after the counter reset switch 315 is turned on.

The configuration may reset the number of works WTi when an operation to determine a new traveling reference line is performed. The configuration may reset the number of works WTi when the steering switch 52, for example, is operated to set the starting position of the traveling reference line L1 or the terminating position of the traveling reference line L1.

The configuration may reset the number of works WTi when the steering switch 52 is operated to set the starting point P10 of the traveling reference line L1.

The working vehicle 1 includes the vehicle body 3 travelable by selectively using either the manual steering that is a manual operation of the steering wheel 30 or the automatic steering that is an automatic operation of the steering wheel 30 based on the traveling reference line L1, the steering switch 52 configured to be switched to selectively start or terminate the automatic steering after determination of the traveling reference line L1, and the calculation device (the second controller 60B) to calculate the number of works defined as the number of completed ground works. According to this configuration, since the number of works at which the ground work has been performed can be easily obtained, the driver does not need to remember the current number of works counted from the starting or the middle of the work, thereby improving the work efficiency. In other words, the number of works can be easily known without the need to install an imaging device such as a camera to obtain the number of works.

For example, in an agricultural field, after a transplanting work or the like, it is necessary to perform a pest control work (chemical spraying) when the crop has grown to some extent. In this case, since an agricultural working machine has to enter the agricultural field for the pest control work, it is necessary to secure a passage for entering the agricultural field. That is, since it is necessary to form, in the agricultural field, portions for passages at predetermined intervals without performing the ground work on the portion, it is easy to secure the passage, for example, for every five lines of works by obtaining the number of works. In other words, the number of works can be easily known without the need to install an imaging device such as a camera to obtain the number of works.

The calculation device (the second controller 60B) is configured or programed to display, as the number of works, the number of switching operations of the steering switch 52 to either start or terminate the automatic steering. According to this configuration, it is possible to easily know the number of works in a case where the ground work is performed in the agricultural field mainly by the automatic steering.

The calculation device (the second controller 60B) is configured or programed to calculate, as the number of works, the number of turns of the vehicle body 2 by using the manual steering after the determination of the traveling reference line L1 or after termination of the automatic steering. According to this configuration, it is possible to easily know the number of works in a case where the work, for example, is repeated by turning the vehicle body 2 in the turning area of the agricultural field regardless of the automatic steering and the manual steering.

The calculation device (the second controller 60B) is configured or programed to calculate, as the number of works, the number of switching operations of the steering switch 52 to start the automatic steering after the determination of the traveling reference line L1. According to this configuration, it is possible to easily know the number of works based on the number of times at which a driver has operated the steering switch 52 with an intention of starting the work.

The working vehicle 1 includes the counter reset switch 315. The calculation device (the second controller 60B) is configured or programmed to reset the number of works when the counter reset switch 315 is operated. According to this configuration, it can be easily known how many times the ground work has been performed from a place from which the agricultural working machine enters for the pest control or the like, that is, from a point where the number of works is reset.

The calculation device (the second controller 60B) is configured or programmed to reset the number of works when the vehicle body 2 is turned by using the manual steering after the counter reset switch 315 is operated. According to this configuration, the number of works can be reset when a turn, for example, is made by the driver to move to the next planned traveling line L1.

The calculation device (the second controller 60B) is configured or programmed to reset the number of works when the steering switch 52 is operated to start the automatic steering after the counter reset switch 315 is operated. According to this configuration, the previous number of works can be reset at the same time when the automatic steering is started by the steering switch 52.

The calculation device (the second controller 60B) is configured or programmed to reset the number of works when an operation to determine the traveling reference line L1 is performed. According to this configuration, the number of works is reset in a case where a line different from the previous line, for example, is determined, such as a case where a new traveling reference line L1 is determined, so that the number of works in a new operation can be easily known.

The working vehicle 1 includes the display 45 to display the number of works at least after the automatic steering. According to this configuration, a work can be performed while checking the number of works.

All the features of the embodiment disclosed in this application should be considered just as examples, and the embodiment does not restrict the present invention accordingly. A scope of the present invention is shown not in the above-described embodiment but in claims, and is intended to include all modifications within and equivalent to a scope of the claims.

### Description of reference numerals:

- 1: Working vehicle
- 2: Vehicle body
- 3: Vehicle body
- 30: Steering wheel
- 45: Display
- 52: Steering switch
- 315: Counter reset switch
- L1: Traveling reference line
- WTi: Number of works

## Claims

1. A working vehicle, comprising:
- a vehicle body travelable by selectively using either manual steering that is manual operation of a steering wheel or automatic steering that is automatic operation of the steering wheel based on a traveling reference line;
- a steering switch configured to be switched to selectively start or terminate the automatic steering after determination of the traveling reference line; and
- a calculation device to calculate the number of works defined as the number of completed ground works.

2. The working vehicle according to claim 1, wherein
- the calculation device is configured or programed to display, as the number of works, the number of switching operations of the steering switch to either start or terminate the automatic steering.

3. The working vehicle according to claim 1, wherein
- the calculation device is configured or programed to calculate, as the number of works, the number of turns of the vehicle by using the manual steering after the determination of the traveling reference line or after termination of the automatic steering.

4. The working vehicle according to claim 1, wherein
- the calculation device is configured or programed to calculate, as the number of works, the number of switching operations of the steering switch to start the automatic steering after the determination of the traveling reference line.

5. The working vehicle according to any one of claims 1 to 4, further comprising:
- a counter reset switch, wherein
- the calculation device is configured or programmed to reset the number of works when the counter reset switch is operated.

6. The working vehicle according to any one of claims 1 to 4, further comprising:
- a counter reset switch, wherein
- the calculation device is configured or programmed to reset the number of works when the vehicle body is turned by using the manual steering after the counter reset switch is operated.

7. The working vehicle according to any one of claims 1 to 4, further comprising:
- a counter reset switch, wherein
- the calculation device is configured or programmed to reset the number of works when the steering switch is operated to start the automatic steering after the counter reset switch is operated.

8. The working vehicle according to claim 6, wherein
- the calculation device is configured or programmed to reset the number of works when an operation to determine the traveling reference line is performed.

9. The working vehicle according to claim 6, further comprising:
- a display to display the number of works at least after the automatic steering.
